# EUROPEAN PATENT APPLICATION

(11) **EP 4 807 801 A1**
(43) Date of publication of application: **16.09.2026**
(21) Application number: 26163412.5
(22) Date of filing: 09.03.2026
(51) Int. Cl.: H01M 4/134, H01M 4/1395, H01M 4/36, H01M 4/38

(54) **ELECTRODE ACTIVE MATERIAL COMPOSITE PARTICLES AND METHOD FOR PRODUCING SAME, ELECTRODE MIXTURE, AND BATTERY**

(30) Priority: 13.03.2025 JP 2025040722
(71) Applicant: Toyota Jidosha Kabushiki Kaisha, Toyota-shi, Aichi-ken 471-8571 (JP)
(72) Inventor: YOKOI, Yuma, TOYOTA-SHI, AICHI-KEN, 471-8571 (JP); KUDO, So, TOYOTA-SHI, AICHI-KEN, 471-8571 (JP); NAKAI, Takaaki, TOYOTA-SHI, AICHI-KEN, 471-8571 (JP); FURUYA, Ryosuke, TOYOTA-SHI, AICHI-KEN, 471-8571 (JP)
(74) Representative: Cabinet Beau de Loménie

(57) **Abstract**

The present disclosure provides electrode active material composite particles capable of alleviating the influence of expansion and contraction of silicon during charging and discharging of a battery, a method for producing the same. The d10 of the composite particles is from 2.5 µm to 8.0 µm, and the ratio of the d10 of the composite particles to the d50 of the composite particles is from 0.40 to 0.65. The method for producing electrode active material composite particles according to the present disclosure includes: providing a slurry including a plurality of silicon particles as primary particles, and a dispersion medium; and drying and removing the dispersion medium by spray drying. In the method of the present disclosure, the solid concentration of the slurry is from 10 mass% to 40 mass%, and the liquid feed rate of the slurry in the spray drying is from 10 g/h to 300 g/h.

## Description

### TECHNICAL FIELD

The present disclosure relates to electrode active material composite particles, a method for producing the same, an electrode mixture, and a battery.

### BACKGROUND

In a battery that includes silicon as an electrode active material, it is known that the silicon expands and contracts during charging and discharging. A technique for alleviating the influence of such expansion and contraction by voids in an electrode active material layer has been developed.

For example, PTL 1 discloses a negative electrode for an all-solid-state battery having a sulfide solid electrolyte and a negative electrode active material, in which the negative electrode active material is composite particles having a carbon material containing Si or Sn, the Si or Sn has a particle diameter of 94 nm or less, the negative electrode active material has a particle diameter of 15 µm or less, and the negative electrode has a porosity of 5% to 30%.

### [CITATION LIST]

### [PATENT LITERATURE]

[PTL 1] Japanese Unexamined Patent Publication (Kokai) No. 2017-054720

### SUMMARY

### [TECHNICAL PROBLEM]

The electrode active material composite particles can alleviate the influence of expansion and contraction of silicon during charging and discharging of a battery by voids in the composite particles. However, there is room for improvement in alleviating the influence of such expansion and contraction in the electrode active material composite particles containing silicon.

An object of the present disclosure is to provide electrode active material composite particles capable of alleviating the influence of expansion and contraction of silicon during charging and discharging of a battery, a method for producing the same, an electrode mixture including such electrode active material composite particles, and a battery including such an electrode mixture.

The present inventors have found that this object can be achieved by the following means.

### <Aspect 1>

Electrode active material composite particles each including a plurality of silicon particles as primary particles, wherein
a d10 of the composite particles is from 2.5 µm to 8.0 µm, and
a ratio of the d10 of the composite particles to a d50 of the composite particles is from 0.40 to 0.65.

### <Aspect 2>

The electrode active material composite particles according to aspect 1, wherein the d10 of the composite particles is from 2.9 µm to 6.5 µm.

### <Aspect 3>

The electrode active material composite particles according to aspect 2, wherein the d10 of the composite particles is from 4.0 µm to 4.8 µm.

### <Aspect 4>

The electrode active material composite particles according to any one of aspects 1 to 3, wherein the d50 of the composite particles is from 4.7 µm to 10 µm.

### <Aspect 5>

The electrode active material composite particles according to any one of aspects 1 to 4,
wherein a d90 of the composite particles is from 8.0 µm to 20 µm, and
wherein a ratio of the d10 of the composite particles to the d90 of the composite particles is from 0.20 to 0.40.

### <Aspect 6>

The electrode active material composite particles according to any one of aspects 1 to 5, wherein a ratio of a d50 of the primary particles to the d50 of the composite particles is from 0.070 to 0.15.

### <Aspect 7>

The electrode active material composite particles according to any one of aspects 1 to 6, wherein the silicon particles are porous silicon particles.

### <Aspect 8>

The electrode active material composite particles according to any one of aspects 1 to 7, the electrode active material composite particles each further including a binder.

### <Aspect 9>

An electrode mixture including the electrode active material composite particles according to any one of aspects 1 to 8.

### <Aspect 10>

A battery, having an electrode active material layer, wherein
the electrode active material layer contains the electrode mixture according to aspect 9.

### <Aspect 11>

The battery according to aspect 10, wherein the battery is a solid-state battery.

### <Aspect 12>

A method for producing the electrode active material composite particles according to any one of aspects 1 to 8, the method including:
providing a slurry including a plurality of silicon particles as primary particles, and a dispersion medium; and
drying and removing the dispersion medium by spray drying,
wherein a solid concentration of the slurry is from 10 mass% to 40 mass%, and
wherein a liquid feed rate of the slurry in the spray drying is from 10 g/h to 300 g/h.

### [ADVANTAGEOUS EFFECTS OF INVENTION]

According to the present disclosure, it is possible to provide electrode active material composite particles capable of alleviating the influence of expansion and contraction of silicon during charging and discharging of a battery, a method for producing the same, an electrode mixture including such electrode active material composite particles, and a battery including such an electrode mixture.

### BRIEF DESCRIPTION OF DRAWINGS

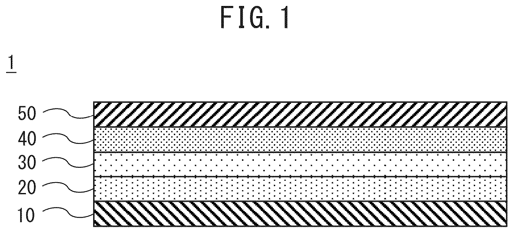

Fig. 1 is a schematic cross-sectional view illustrating an example of a battery of the present disclosure.

### DESCRIPTION OF EMBODIMENTS

Hereinafter, embodiments of the present disclosure will be described in detail. However, it should be noted that the present disclosure is not limited to the following embodiments, and can be variously modified within the scope thereof.

### <<Electrode Active Material Composite Particles>>

The electrode active material composite particles of the present disclosure each include a plurality of silicon particles as primary particles. The d10 of the composite particles is from 2.5 µm to 8.0 µm, and the ratio of the d10 of the composite particles to the d50 of the composite particles is from 0.40 to 0.65.

The present inventors have found that, in electrode active material composite particles each including a plurality of silicon particles as primary particles, when the d10 of the composite particles and the ratio of the d10 of the composite particles to the d50 of the composite particles are within a predetermined range, the influence of expansion and contraction of silicon during charging and discharging of a battery can be alleviated. The reason for this is not intended to be bound by any theory, but is presumed to be as follows. Specifically, it is considered that when the proportion of electrode active material composite particles having relatively small particle diameters falls within an appropriate range, particularly when the proportion is not too small and the particle size distribution of the electrode active material composite particles at the d50 or less is appropriately wide, the tortuosity (tortuosity factor) of the electrode active material layer decreases, resulting in higher ion conductivity. Accordingly, it is considered that reaction unevenness in the electrode active material layer is less likely to occur, and as a result, local expansion of silicon is suppressed, which helps alleviate the influence of expansion and contraction.

The electrode active material composite particles each are a secondary particle formed by aggregation of a plurality of silicon primary particles as an electrode active material. The electrode active material composite particles may each be a secondary particle formed by granulating a plurality of silicon primary particles. In the present disclosure, the term "electrode active material composite particles" may be simply referred to as a "composite particles".

The "electrode active material" may be a "positive electrode active material" or a "negative electrode active material", particularly a "negative electrode active material".

Hereinafter, each element constituting the electrode active material composite particles of the present disclosure will be described.

### <Primary Particles>

The electrode active material composite particles of the present disclosure each include a plurality of silicon particles as primary particles. Silicon functions as an electrode active material and undergoes expansion and contraction in response to charging and discharging of the battery.

The number of primary particles contained in one electrode active material composite particle is not particularly limited, and may be, for example, 2 or more, 5 or more, 10 or more, 50 or more, or 100 or more, and may be 10000 or less, 1000 or less, 500 or less, or 100 or less.

The content of the primary particles in the electrode active material composite particle is not particularly limited, and can be appropriately set in consideration of a desired battery capacity and the like.

The composition of the primary particles is not particularly limited as long as the primary particles contain silicon. The proportion of silicon in all elements contained in the primary particles may be, for example, 50 mol% or more, 70 mol% or more, 90 mol% or more, 95 mol% or more, or 99 mol% or more. The primary particles may or may not contain an element other than silicon. Examples of the element other than silicon include Sn, Fe, Co, Ni, Ti, Cr, B, and P, in addition to Li. The primary particles may include an oxide of silicon.

The silicon particles may be amorphous silicon particles or crystalline silicon particles, particularly crystalline silicon particles. The crystal phase included in the silicon particles is not particularly limited.

The silicon particles may be porous silicon particles. Specifically, the silicon particles may each have a plurality of pores. As a result, the influence of expansion and contraction of silicon can be alleviated not only by voids in the electrode active material composite particles described later but also by the pores of the silicon particles. The number of pores, pore volume, pore diameter, and the like of the porous silicon particles are not particularly limited, and can be appropriately set in consideration of the magnitude of expansion and contraction of silicon and the like. The pore diameter may be, for example, on the order of nanometers.

### <Various Particle Diameters and Particle Diameter Ratio>

### (d10 of Composite Particles and d10 of Composite Particles/d50 of Composite Particles)

In the electrode active material composite particles of the present disclosure, the d10 of the composite particles is from 2.5 µm to 8.0 µm, and the ratio of the d10 of the composite particles to the d50 of the composite particles is from 0.40 to 0.65. This can alleviate the influence of expansion and contraction of silicon during charging and discharging of the battery.

The d10 of the composite particles may be from 2.9 µm to 6.5 µm, from 3.2 µm to 6.6 µm, from 3.4 µm to 5.5 µm, from 3.8 µm to 5.0 µm, or from 4.0 µm to 4.8 µm. The d10 of the composite particles may be 2.8 µm or more, 2.9 µm or more, 3.0 µm or more, 3.2 µm or more, 3.4 µm or more, 3.6 µm or more, 3.8 µm or more, 4.0 µm or more, 4.2 µm or more, 4.3 µm or more, 4.4 µm or more, or 4.5 µm or more, and may be 7.0 µm or less, 6.5 µm or less, 6.0 µm or less, 5.5 µm or less, 5.0 µm or less, 4.8 µm or less, 4.6 µm or less, 4.5 µm or less, 4.4 µm or less, or 4.3 µm or less. This can effectively alleviate the influence of expansion and contraction of silicon during charging and discharging of the battery.

The ratio of the d10 of the composite particles to the d50 of the composite particles may be from 0.44 to 0.62. The ratio of the d10 of the composite particles to the d50 of the composite particles may be 0.44 or more, 0.50 or more, 0.55 or more, 0.60 or more, or 0.62 or more, and may be 0.65 or less, 0.62 or less, or 0.60 or less. This can effectively alleviate the influence of expansion and contraction of silicon during charging and discharging of the battery.

### (d50 of Composite Particle)

The d50 of the composite particles may be from 4.7 µm to 10 µm, from 5.1 µm to 9.5 µm, from 5.5 µm to 9.3 µm, or from 6.9 µm to 9.1 µm. The d50 of the composite particles may be 5.1 µm or more, 5.4 µm or more, 5.5 µm or more, 6.0 µm or more, 6.5 µm or more, 7.0 µm or more, or 7.5 µm or more, and may be 10 µm or less, 9.5 µm or less, 9.3 µm or less, 9.1 µm or less, 9.0 µm or less, 8.5 µm or less, 8.0 µm or less, 7.5 µm or less, or 7.0 µm or less. This can effectively alleviate the influence of expansion and contraction of silicon during charging and discharging of the battery.

### (d90 of Composite Particles and d10 of Composite Particles/d90 of Composite Particles)

The d90 of the composite particles may be from 8.0 µm to 20 µm, from 9.0 µm to 18 µm, or from 12 µm to 17 µm, and the ratio of d10/d90 may be from 0.20 to 0.40 or from 0.24 to 0.37. The d90 of the composite particles may be 8.0 µm or more, 9.0 µm or more, 10 µm or more, 11 µm or more, 12 µm or more, or 13 µm or more, and may be 20 µm or less, 18 µm or less, 17 µm or less, 15 µm or less, 14 µm or less, or 13 µm or less, and the ratio of d10/d90 may be 0.20 or more, 0.24 or more, 0.30 or more, 0.33 or more, or 0.37 or more, and may be 0.40 or less, 0.37 or less, or 0.33 or less. This can effectively alleviate the influence of expansion and contraction of silicon during charging and discharging of the battery.

### (d50 of Primary Particles/d50 of Composite Particles)

The ratio of the d50 of the primary particles to the d50 of the composite particles may be from 0.070 to 0.15, from 0.080 to 0.13, or from 0.090 to 0.12. The ratio of the d50 of the primary particles to the d50 of the composite particles may be 0.070 or more, 0.080 or more, 0.090 or more, 0.094 or more, or 0.10 or more, and may be 0.15 or less, 0.14 or less, 0.13 or less, 0.12 or less, 0.11 or less, 0.10 or less, or 0.094 or less. This can effectively alleviate the influence of expansion and contraction of silicon during charging and discharging of the battery.

### (d50 of Primary Particles/d10 of Composite Particles)

The ratio of the d50 of the primary particles to the d10 of the composite particles may be from 0.12 to 0.26, from 0.13 to 0.26, or from 0.15 to 0.26. The ratio of the d50 of the primary particles to the d10 of the composite particles may be 0.12 or more, 0.13 or more, 0.14 or more, 0.15 or more, or 0.16 or more, and may be 0.26 or less, 0.24 or less, 0.22 or less, 0.20 or less, 0.18 or less, 0.16 or less, or 0.15 or less. This can effectively alleviate the influence of expansion and contraction of silicon during charging and discharging of the battery.

### (d50 of Primary Particles)

In the electrode active material composite particles of the present disclosure, the d50 of the primary particles may be from 0.10 µm to 2.0 µm, from 0.35 µm to 1.7 µm, from 0.45 µm to 1.5 µm, or from 0.65 µm to 1.1 µm. The d50 of the primary particles may be 0.10 µm or more, 0.20 µm or more, 0.30 µm or more, 0.35 µm or more, 0.40 µm or more, 0.45 µm or more, 0.50 µm or more, 0.55 µm or more, 0.60 µm or more, 0.65 µm or more, 0.70 µm or more, or 0.75 µm or more, and may be 2.0 µm or less, 1.5 µm or less, 1.3 µm or less, 1.2 µm or less, 1.1 µm or less, 1.0 µm or less, 0.90 µm or less, 0.80 µm or less, 0.75 µm or less, 0.70 µm or less, or 0.65 µm or less. This can effectively alleviate the influence of expansion and contraction of silicon during charging and discharging of the battery.

The d50 of the primary particles may vary depending on the type of silicon particles, serving as the primary particles.

For example, when the silicon particles are crystalline silicon particles, the d50 of the primary particles may be from 0.10 µm to 0.60 µm, from 0.20 µm to 0.50 µm, or from 0.30 µm to 0.40 µm, and may be 0.35 µm.

For example, when the silicon particles are porous silicon particles, the d50 of the primary particles may be from 0.35 µm to 2.0 µm, or from 0.45 µm to 1.5 µm, from 0.55 µm to 1.3 µm, or from 0.65 µm to 1.1 µm. In this case, the d50 of the primary particles may be 0.35 µm or more, 0.45 µm or more, 0.55 µm or more, 0.65 µm or more, or 0.75 µm or more, and may be 2.0 µm or less, 1.7 µm or less, 1.5 µm or less, 1.4 µm or less, 1.3 µm or less, 1.2 µm or less, 1.1 µm or less, 1.0 µm or less, 0.90 µm or less, 0.80 µm or less, 0.75 µm or less, 0.70 µm or less, or 0.65 µm or less.

When porous silicon particles are prepared using silicon particles as a starting material, the d50 of the porous silicon particles serving as primary particles can be appropriately adjusted by changing the d50 of the silicon particles serving as the starting material.

The d10, d50, and d90 of the composite particles and the d50 of the primary particles can be measured using a laser diffraction-scattering particle size analyzer. As the dispersion medium, pure water can be used. The refractive index at the time of measurement may be, for example, 3.5.

As the laser diffraction-scattering particle size analyzer, for example, Partica LA-960V2 available from HORIBA can be used.

The d10, d50, and d90 of the composite particles may be measured from an electrode laminate obtained by disassembling the battery through the following procedure. Specifically, at least a part of the negative electrode active material layer is taken out as a sample from the obtained electrode laminate and washed using an organic solvent capable of dissolving the solid electrolyte. Thereafter, the d10, d50, and d90 of the composite particles can be measured by the above laser diffraction-scattering particle size analyzer.

The d50 of the primary particles may be measured from the composite particles obtained by disassembling the battery through the following procedure. Specifically, the obtained composite particles are washed with an organic solvent capable of dissolving the binder and the like. Thereafter, for the composite particles obtained by performing centrifugation and removing the supernatant, the d50 of the primary particles can be measured by the above-described laser diffraction-scattering particle size analyzer.

### <Binder>

The electrode active material composite particles of the present disclosure may further include a binder. The binder can bind a plurality of primary particles to each other.

The binder is not particularly limited, and may be, for example, a butadiene rubber (BR)-based binder, a butylene rubber (IIR)-based binder, an acrylate butadiene rubber (ABR)-based binder, a styrene butadiene rubber (SBR)-based binder, a polyvinylidene fluoride (PVdF)-based binder, a polytetrafluoroethylene (PTFE)-based binder, a polyimide (PI)-based binder, a carboxymethyl cellulose (CMC)-based binder, a polyacrylic acid salt-based binder, a polyacrylic acid ester-based binder, and the like, or a combination thereof.

The content of the binder in the electrode active material composite particles is not particularly limited, and can be appropriately set in consideration of desired binding properties and the like.

### <Void>

The electrode active material composite particles of the present disclosure has a plurality of voids. The voids can alleviate the influence of expansion and contraction of silicon during charging and discharging of the battery.

The number of voids, porosity, size of the voids, and the like in the electrode active material composite particles are not particularly limited, and can be appropriately set in consideration of, for example, the magnitude of expansion and contraction of silicon.

### <<Method for Producing Electrode Active Material Composite Particle>>

The method for producing electrode active material composite particles according to the present disclosure includes: providing a slurry including a plurality of silicon particles as primary particles, and a dispersion medium; and drying and removing the dispersion medium by spray drying. In the method of the present disclosure, the solid concentration of the slurry is from 10 mass% to 40 mass%, and the liquid feed rate of the slurry in the spray drying is from 10 g/h to 300 g/h.

### <Provision of Slurry>

The method of the present disclosure includes providing a slurry including a plurality of silicon particles as primary particles, and a dispersion medium.

Reference may be made to the above description regarding the primary particles.

The dispersion medium is not particularly limited, as long as the primary particles can be dispersed therein.

The slurry may further contain a binder. Reference may be made to the above description regarding the binder.

When the slurry includes a binder, the dispersion medium is not particularly limited as long as it can disperse the primary particles and dissolve or disperse the binder.

### <Removal of Dispersion Medium by Drying>

The method of the present disclosure includes drying and removing the dispersion medium by spray drying.

In the method of the present disclosure, the solid concentration of the slurry is from 10 mass% to 40 mass%, and the liquid feed rate of the slurry in the spray drying is from 10 g/h to 300 g/h. The particle diameters of the electrode active material composite particles can be controlled by adjusting the solid concentration of the slurry and the liquid feed rate of the slurry in spray drying according to the d50 of the primary particles. Accordingly, for example, for the primary particles having a d50 within a predetermined range, the d10 of the electrode active material composite particles can be controlled to be substantially the same. Electrode active material composite particles having a smaller d10 can also be obtained from primary particles having a larger d50. Specifically, the electrode active material composite particles having a d10 of 4.00 can be obtained from primary particles having a d50 of 1.05, and the electrode active material composite particles having a d10 of 4.30 can be obtained from primary particles having a d50 of 0.65.

The solid concentration of the slurry may be from 15 mass% to 35 mass%, or from 20 mass% to 30 mass%, and the liquid feed rate of the slurry in spray drying may be from 50 g/h to 250 g/h, from 80 g/h to 250 g/h, or from 100 g/h to 250 g/h.

The drying temperature, spraying pressure, and the like in the spray drying are not particularly limited, and can be appropriately set in consideration of the solid concentration of the slurry or the like.

### <<Electrode Mixture>>

The electrode mixture of the present disclosure includes the electrode active material composite particles of the present disclosure. The electrode mixture may optionally include a solid electrolyte, a conductive additive, a binder, and the like.

In the present disclosure, the "electrode mixture" refers to a composition that can constitute an electrode active material layer as it is or by further containing other components. In the present disclosure, the "electrode mixture slurry" refers to a slurry that includes a dispersion medium in addition to the "electrode mixture" and can be applied and dried to form an electrode active material layer.

In the present disclosure, the "electrode mixture" may be a "positive electrode mixture" or a "negative electrode mixture", particularly a "negative electrode mixture".

Hereinafter, each element constituting the electrode mixture of the present disclosure will be described.

### <Electrode Active Material Composite Particles>

Reference may be made to the above description regarding the electrode active material composite particles.

The content of the electrode active material composite particles in the electrode mixture is not particularly limited, and can be appropriately set in consideration of a desired battery capacity and the like.

### <Solid Electrolyte>

Examples of the solid electrolyte include inorganic solid electrolytes such as a sulfide solid electrolyte, an oxide solid electrolyte, a nitride solid electrolyte, and a halide solid electrolyte, and organic polymer electrolytes such as a polymer electrolyte. The solid electrolyte may be, in particular, a sulfide solid electrolyte.

For example, when the battery is a lithium ion secondary battery, the solid electrolyte may have lithium ionic conductivity.

Examples of the sulfide solid electrolyte having lithium ionic conductivity include a solid electrolyte containing a Li element, an X element (X represents at least one of P, As, Sb, Si, Ge, Sn, B, Al, Ga, and In), and a S element. The sulfide solid electrolyte may further contain at least one of an O element and a halogen element. Examples of the halogen element include an F element, a Cl element, a Br element, and an I element.

Examples of the sulfide solid electrolyte include Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZmSn (where m and n are positive numbers; and Z represents any of Ge, Zn, and Ga), Li₂S-GeS₂, Li₂S-SiS₂-Li₃PO₄, and Li₂S-SiS₂-LiₓMO_{y} (where x and y are positive numbers; and M represents any one of P, Si, Ge, B, Al, Ga, and In).

Examples of the oxide solid electrolyte having lithium ionic conductivity include a solid electrolyte containing a Li element, a Y element (Y represents at least one of Nb, B, Al, Si, P, Ti, Zr, Mo, W, and S), and an O element. Specific examples thereof include garnet-type solid electrolytes such as Li₇La₃Zr₂O₁₂, Li₇₋ₓLa₃(Zr₂₋ₓNbₓ)O₁₂ (0≤x≤2), and Li₅La₃Nb₂O₁₂; perovskite-type solid electrolytes such as (Li,La)TiO₃, (Li,La)NbO₃, and (Li,Sr)(Ta,Zr)O₃; nasicon-type solid electrolytes such as Li(Al,Ti)(PO₄)₃ and Li(Al,Ga)(PO₄)₃; Li-P-O-based solid electrolytes such as Li₃PO₄ and LIPON (compound in which part of O in Li₃PO₄ is substituted with N); and Li-B-O-based solid electrolytes such as Li₃BO₃ and a compound in which a part of O of Li₃BO₃ is substituted with C.

The content of the solid electrolyte in the electrode mixture is not particularly limited, and can be appropriately set in consideration of the desired ionic conductivity and the like.

### <Conductive Additive>

The conductive additive may be, for example, a carbon material, metal particles, or a combination thereof. The carbon material may be, for example, a non-fibrous carbon material such as acetylene black (AB) or Ketjenblack (KB); a fibrous carbon material such as vapor-grown carbon fiber (VGCF), carbon nanotube (CNT), or carbon nanofiber (CNF); or a combination thereof. The metal particles may be, for example, nickel, copper, iron, stainless steel, or a combination thereof.

The content of the conductive additive in the electrode mixture is not particularly limited, and can be appropriately set in consideration of the desired conductivity and the like.

### <Binder>

The binder may be, for example, a rubber-based binder such as butadiene rubber, hydrogenated butadiene rubber, styrene butadiene rubber (SBR), hydrogenated styrene butadiene rubber, nitrile butadiene rubber, hydrogenated nitrile butadiene rubber, acrylate butadiene rubber (ABR), or ethylene propylene rubber; a fluoride-based binder such as polyvinylidene fluoride (PVdF), a polyvinylidene fluoride-polyhexafluoropropylene copolymer (PVdF-HFP), polytetrafluoroethylene, or fluororubber, a polyolefin-based thermoplastic resin such as polyethylene, polypropylene, or polystyrene, an imide-based resin such as polyimide or polyamide-imide; an amide-based resin such as polyamide; an acrylic-based resin such as polymethyl acrylate or polyethyl acrylate; a methacrylic-based resin such as polymethyl methacrylate or polyethyl methacrylate; or a combination thereof.

The content of the binder in the electrode mixture is not particularly limited and can be appropriately set in consideration of the desired binding properties and the like.

### <Additional Component>

The electrode mixture may or may not further contain a component other than the above.

### <<Battery>>

The battery of the present disclosure has an electrode active material layer, and the electrode active material layer contains the electrode mixture of the present disclosure. As illustrated in Fig. 1, a battery 1 of the present disclosure may include a negative electrode current collector layer 10, a negative electrode active material layer 20, an electrolyte layer 30, a positive electrode active material layer 40, and a positive electrode current collector layer 50 in this order. In the battery of the present disclosure, particularly the negative electrode active material layer 20 may contain the electrode mixture of the present disclosure.

The battery of the present disclosure may be a liquid-based battery or a solid-state battery, particularly a solid-state battery. The solid-state battery may include a combination of a solid electrolyte and a liquid electrolyte as an electrolyte. The solid-state battery may be an all-solid-state battery, i.e., a battery including only a solid electrolyte as the electrolyte.

The battery of the present disclosure may be a secondary battery, particularly a lithium ion secondary battery.

The battery of the present disclosure may be restrained by a restraint member, such as an end plate, from both sides in the stacking direction of the layers. Examples of the restraint method include, but are not limited to, a method using the restraint torque of the bolt.

Hereinafter, each element constituting the battery of the present disclosure will be described. In particular, a case wherein the battery of the present disclosure is an all-solid-state battery and the electrode active material layer containing the electrode mixture of the present disclosure is a negative electrode active material layer will be described below as an example.

### <Negative Electrode Current Collector Layer>

The negative electrode current collector layer may have a foil shape, a plate shape, a mesh shape, a perforated metal shape, a foam, or the like. The negative electrode current collector layer may be a metal foil, a metal mesh, or a carbon sheet, particularly a metal foil. The negative electrode current collector layer may be made of a plurality of foils, sheets, or the like.

The metal constituting the negative electrode current collector layer is not particularly limited, and may be, for example, copper, nickel, chromium, gold, platinum, silver, aluminum, iron, titanium, zinc, cobalt, stainless steel, or the like. In particular, the negative electrode current collector layer may contain at least one metal selected from copper, nickel, and stainless steel.

For the purpose of adjusting the resistance, a coating layer of some kind may be formed on the surface of the negative electrode current collector layer. The negative electrode current collector layer may be a metal foil or a substrate on which the above metal is plated or vapor-deposited. In addition, when the negative electrode current collector layer is composed of a plurality of metal foils, some layer may be provided between the plurality of metal foils.

The thickness of the negative electrode current collector layer is not particularly limited, and may be, for example, 0.1 µm or more, or 1 µm or more, and may be 1 mm or less, or 100 µm or less.

### <Negative Electrode Active Material Layer>

The negative electrode active material layer contains the electrode mixture of the present disclosure. Reference may be made to the above description regarding the electrode mixture of the present disclosure. The negative electrode active material layer may be formed by shaping the electrode mixture of the present disclosure itself into a layer.

The thickness of the negative electrode active material layer is not particularly limited, and may be, for example, 0.1 µm or more and 1000 µm or less.

### <Solid Electrolyte Layer>

The solid electrolyte layer includes at least solid electrolyte particles and may optionally further include a binder and the like.

Reference may be made to the above description regarding the solid electrolyte particles and the binder.

The thickness of the solid electrolyte layer is not particularly limited, and may be, for example, 0.1 µm or more and 1000 µm or less.

### <Positive Electrode Active Material Layer>

The positive electrode active material layer includes at least a positive electrode active material, and may optionally further include a solid electrolyte, a conductive additive, a binder, and the like.

The positive electrode active material is not particularly limited, and may be, for example, an oxide active material. The oxide active material used in the lithium ion battery may be, for example, LiCoO₂, LiMnO₂, Li₂NiMn₃O₈, LiVO₂, LiCrO₂, LiFePO₄, LiCoPO₄, LiNiO₂, LiNi_{1/3}Co_{1/3}Mn_{1/3}O₂, or the like. A coating layer containing a Li-ion conductive oxide such as LiNbO₃ may be formed on the surface of the active material.

The content of the positive electrode active material in the positive electrode active material layer is not particularly limited.

Reference may be made to the above description regarding the solid electrolyte, conductive additive, and binder.

The thickness of the positive electrode active material layer is not particularly limited, and may be, for example, 0.1 µm or more and 1000 µm or less.

### <Positive Electrode Current Collector Layer>

The positive electrode current collector layer may have a foil shape, a plate shape, a mesh shape, a perforated metal shape, a foam, or the like. The positive electrode current collector layer may be a metal foil or a metal mesh, particularly a metal foil. The positive electrode current collector layer may be made of a plurality of foils.

The metal constituting the positive electrode current collector layer may be copper, nickel, chromium, gold, platinum, silver, aluminum, iron, titanium, zinc, cobalt, stainless steel, or the like, and in particular, the positive electrode current collector layer may contain aluminum.

For the purpose of adjusting the resistance, a coating layer of some kind may be formed on the surface of the positive electrode current collector layer. The positive electrode current collector layer may be a metal foil or a substrate on which the metal is plated or vapor-deposited. In addition, when the positive electrode current collector layer is composed of a plurality of metal foils, some layer may be provided between the plurality of metal foils.

The thickness of the positive electrode current collector layer is not particularly limited, and may be, for example, 0.1 µm or more, or 1 µm or more, and may be 1 mm or less, or 100 µm or less.

### <Additional Configuration>

The battery may be one in which each of the above-described configurations is housed inside the outer package. As the outer package, any known outer package of a battery can be adopted. A plurality of batteries may be electrically connected to each other as desired, or may be stacked on each other as desired to form a battery pack. In this case, the battery pack may be housed in a known battery case. The battery may further have an obvious configuration such as a necessary terminal. The shape of the battery may be, for example, a coin shape, a laminate (pouch) shape, a cylindrical shape, a square shape, or the like.

The method for producing the battery of the present disclosure is not particularly limited, and includes, for example, forming a negative electrode active material layer containing the electrode mixture of the present disclosure.

Examples of the method of forming the negative electrode active material layer containing the electrode mixture include a method of mixing constituent materials such as silicon primary particles to obtain an electrode mixture, the obtained electrode mixture being subjected to dry molding or wet molding.

The method for producing a battery of the present disclosure may further include forming an electrode laminate by laminating a negative electrode current collector layer, a negative electrode active material layer, a solid electrolyte layer, a positive electrode active material layer, and a positive electrode current collector layer in this order.

Other members such as a terminal are attached to the electrode laminate, if necessary. The electrode laminate is housed in a battery case and sealed to obtain a battery.

### EXAMPLES

### <<Example 1>>

### <Preparation of Electrode Active Material Composite Particles>

A plurality of crystalline silicon (Si) particles (d50: 0.35 µm) as primary particles were added to a solution in which PVdF as a binder was dissolved or dispersed in an organic solvent as a dispersion medium to obtain a slurry having a solid concentration of 30 mass%. The organic solvent in the slurry was dried and removed by spray drying to produce electrode active material composite particles. The liquid feed rate of the slurry in the spray drying was 150 g/h.

The d50 of the primary particles and the d10, d50, and d90 of the composite particles were measured with a laser diffraction-scattering particle size analyzer (Partica LA-960V2, available from HORIBA, Ltd.). Pure water was used as a dispersion medium, and the refractive index was 3.5. Each particle diameter and the ratio of each particle diameter are shown in Table 1. In each of the examples described later, the particle diameters were measured in the same manner.

### <Production of Negative Electrode Active Material Layer>

The obtained electrode active material composite particles, binder, conductive additive, and solid electrolyte were added to an organic solvent to prepare a mixed solution. The mixed solution was kneaded using an ultrasonic homogenizer to obtain a negative electrode mixture slurry. The obtained negative electrode mixture slurry was applied to a copper foil as a negative electrode current collector layer to produce a negative electrode active material layer. Thus, a negative electrode laminate in which the negative electrode current collector layer and the negative electrode active material layer were laminated was obtained and formed into a strip shape.

### <Production of Solid Electrolyte Layer>

A binder and a solid electrolyte were added to an organic solvent to prepare a mixed solution. The mixed solution was kneaded using an ultrasonic homogenizer to obtain a solid electrolyte mixture slurry. The obtained solid electrolyte mixture slurry was applied to an aluminum (Al) foil as a release sheet to produce a solid electrolyte layer. A total of three solid electrolyte layers were produced in the same procedure and formed into a strip shape.

### <Production of Positive Electrode Active Material Layer>

A binder, conductive additive, solid electrolyte, and LiNi_{0.8}Co_{0.15}Mn_{0.05}O₂ as a positive electrode active material were added to an organic solvent to prepare a mixed solution. The mixed solution was kneaded using an ultrasonic homogenizer to obtain a positive electrode mixture slurry. The obtained positive electrode mixture slurry was applied to an Al foil as a positive electrode current collector layer to produce a positive electrode active material layer. Thus, a positive electrode laminate in which the positive electrode current collector layer and the positive electrode active material layer were laminated was obtained, and the positive electrode laminate was formed into a strip shape.

### <Production of Battery>

The negative electrode laminate and the second solid electrolyte layer were laminated so that the negative electrode active material layer and the solid electrolyte layer faced each other, and roll-pressed at 25°C and a pressure of 50 kN/cm. The solid electrolyte layer was transferred onto the negative electrode active material layer by peeling off the Al foil as a release sheet from the solid electrolyte layer.

The positive electrode laminate and the first solid electrolyte layer were laminated so that the positive electrode active material layer and the solid electrolyte layer faced each other and roll-pressed at 165°C and a pressure of 50 kN/cm. The solid electrolyte layer was transferred onto the positive electrode active material layer by peeling off the Al foil as a release sheet from the solid electrolyte layer.

The negative electrode laminate to which the solid electrolyte layer was transferred and the positive electrode laminate to which the solid electrolyte layer was transferred were punched with a punching machine having a size of φ 13.00 mm and φ 11.28 mm, respectively.

The third solid electrolyte layer punched out to a predetermined size was further transferred onto the second solid electrolyte layer laminated on the negative electrode active material layer using a uniaxial press machine. The negative electrode laminate and the positive electrode laminate were laminated so that the solid electrolyte layer on the negative electrode active material layer and the solid electrolyte layer on the positive electrode active material layer faced each other.

A current extraction tab was attached to the positive electrode active material layer and the negative electrode active material layer, and the resultant was sealed in an Al laminate using a vacuum laminate sealer and restrained at a pressure of 5 MPa to produce an all-solid-state battery.

### <Evaluation>

### (Measurement of Ion Conductivity)

In a cylinder made of Macor, 5 mg of the negative electrode mixture powder obtained from the negative electrode active material layer peeled off from the negative electrode laminate was placed and pressed at a pressure of 6T to produce a pellet. Both ends of the obtained pellet were clamped with SUS pins, and a restraint pressure was applied to the pellet by bolt fastening. The ion conductivity of the obtained sample was calculated by an AC impedance method while being maintained at 25°C. The measurements were performed using a Solartron 1260, with the voltage applied at 5 mV and the frequency range measured at 0.01 MHz to 1 MHz.

### (Measurement of Restraint Pressure Increase Amount)

The restraint pressure increase amount when the obtained all-solid-state battery was charged from the uncharged state to 4.05 V was measured using a load cell. The results are shown in Table 1. The values shown in Table 1 are obtained by normalizing the measured values at a Si charge of 1000 mAh with the capacity of the all-solid-state battery. The restraint pressure increase amount means the expansion amount of the electrode active material composite particles.

### <<Example 2 and Comparative Examples 1 and 2>>

All-solid-state batteries of Example 2 and Comparative Examples 1 and 2 were obtained and evaluated in the same manner as in Example 1 except that the solid concentration of the slurry and the liquid feed rate in the preparation of the electrode active material composite particles were changed as listed in Table 1. The results are shown in Table 1.

### [Table 1]

**Table 1**

| | Primary particle | | Production condition | | Particle diameter of composite particle | | | Particle diameter ratio | | | | Ion conductivity [mS/cm] | Restraint pressure increase amount [MPa/mAh] |
|---|---|---|---|---|---|---|---|---|---|---|---|---|---|
| | Type | d50 [µm] | Solid concentration [mass%] | Liquid feed rate [g/h] | d10 [µm] | d50 [µm] | d90 [µm] | d10 /d50 | d10 /d90 | d50 of primary particles /d50 of composite particles | d50 of primary particles /d10 of composite particles | | |
| Comparative Example 1 | Crystalline Si | 0.35 | 30 | 150 | 2.05 | 4.25 | 8.31 | 0.48 | 0.25 | 0.082 | 0.17 | 0.20 | 0.30 |
| Comparative Example 2 | Crystalline Si | 0.35 | 30 | 100 | 2.25 | 4.58 | 9.63 | 0.49 | 0.23 | 0.076 | 0.16 | 0.21 | 0.26 |
| Example 1 | Crystalline Si | 0.35 | 20 | 100 | 2.83 | 4.93 | 11.8 | 0.57 | 0.24 | 0.071 | 0.12 | 0.26 | 0.22 |
| Example 2 | Crystalline Si | 0.35 | 20 | 150 | 2.86 | 5.03 | 8.44 | 0.57 | 0.34 | 0.070 | 0.12 | 0.23 | 0.20 |

As shown in Table 1, in the negative electrode active material layers and the batteries of Examples including the electrode active material composite particles of the present disclosure, in which the d10 of the composite particles was from 2.5 µm to 8.0 µm and the ratio of the d10 of the composite particles to the d50 of the composite particles was from 0.40 to 0.65, the ion conductivity was high and the restraint pressure increase amount was small. This supports the assumption that the influence of the expansion and contraction of silicon can be alleviated by increasing the ion conductivity.

### <<Example 3 to 13>>

### <Preparation of Porous Silicon Particle>

Under an argon (Ar) atmosphere, 0.65 g of Si particles and 0.60 g of metallic lithium (Li) (available from Honjo Metal Co., Ltd.) were mixed in an agate mortar to obtain a lithium silicon (LiSi) precursor. In a glass reaction vessel under an Ar atmosphere, 1.0 g of the obtained LiSi precursor and 125 ml of 1,3,5-trimethylbenzene (available from Nacalai Tesque, Inc.) as a dispersion medium were mixed using an ultrasonic homogenizer (UH-50, available from SMT Co., Ltd.). Thereafter, the obtained LiSi precursor dispersion liquid was cooled to 0°C, and 125 ml of ethanol (available from Nacalai Tesque, Inc.) was added dropwise thereto, followed by reaction for 120 minutes. After the reaction, 50 ml of acetic acid (available from Nacalai Tesque, Inc.) was further added dropwise, followed by reaction for 60 minutes. After the reaction, the liquid and the solid reactant were separated by suction filtration. The obtained solid reactant was dried in vacuum at 120°C for 2 hours to obtain nanoporous silicon particles as porous silicon particles. The d50 of the starting material Si particles was varied to prepare porous silicon particles each having a d50 of 0.45, 0.65, 0.75, and 1.05.

An all-solid-state batteries of Examples 3 to 13 were obtained and evaluated in the same manner as in Example 1 except that porous silicon particles having different d50 values were used as the primary particles, and the solid concentration of the slurry and the liquid feed rate in the preparation of the electrode active material composite particles were changed as listed in Table 1. The results are shown in Table 1.

### [Table 2]

**Table 2**

| | Primary particle | | Production condition | | Particle diameter of composite particle | | | Particle diameter ratio | | | | Ion conductivity [mS/cm] | Restraint pressure increase amount [MPa/mAh] |
|---|---|---|---|---|---|---|---|---|---|---|---|---|---|
| | Type | d50 [µm] | Solid concentration [mass%] | Liquid feed rate [g/h] | d10 [µm] | d50 [µm] | d90 [µm] | d10 /d50 | d10 /d90 | d50 of primary particles /d50 of composite particles | d50 of primary particles /d10 of composite particles | | |
| Example 3 | Porous Si | 0.45 | 30 | 50 | 2.96 | 5.23 | 8.00 | 0.57 | 0.37 | 0.086 | 0.15 | 0.29 | 0.18 |
| Example 4 | Porous Si | 0.45 | 30 | 100 | 2.98 | 5.34 | 8.76 | 0.56 | 0.34 | 0.084 | 0.15 | 0.27 | 0.18 |
| Example 5 | Porous Si | 0.45 | 20 | 50 | 3.23 | 5.45 | 9.90 | 0.59 | 0.33 | 0.083 | 0.14 | 0.31 | 0.20 |
| Example 6 | Porous Si | 0.45 | 30 | 150 | 3.41 | 5.51 | 9.29 | 0.62 | 0.37 | 0.082 | 0.13 | 0.34 | 0.18 |
| Example 7 | Porous Si | 0.45 | 30 | 200 | 3.42 | 5.53 | 9.90 | 0.62 | 0.35 | 0.081 | 0.13 | 0.36 | 0.17 |
| Example 8 | Porous Si | 0.65 | 20 | 80 | 3.48 | 6.56 | 11.3 | 0.53 | 0.31 | 0.10 | 0.19 | 0.37 | 0.16 |
| Example 9 | Porous Si | 1.05 | 20 | 250 | 4.00 | 9.10 | 16.9 | 0.44 | 0.24 | 0.12 | 0.26 | 0.39 | 0.15 |
| Example 10 | Porous Si | 0.65 | 20 | 100 | 4.30 | 6.94 | 13.1 | 0.62 | 0.33 | 0.094 | 0.15 | 0.41 | 0.14 |
| Example 11 | Porous Si | 0.75 | 20 | 150 | 4.55 | 7.61 | 12.2 | 0.60 | 0.37 | 0.10 | 0.16 | 0.40 | 0.13 |
| Example 12 | Porous Si | 0.75 | 20 | 200 | 4.80 | 7.88 | 12.9 | 0.61 | 0.37 | 0.10 | 0.16 | 0.39 | 0.15 |
| Example 13 | Porous Si | 1.05 | 30 | 250 | 5.18 | 8.12 | 13.7 | 0.64 | 0.38 | 0.13 | 0.20 | 0.39 | 0.17 |

As shown in Table 2, in the negative electrode active material layers and the batteries of Examples 3 to 13 including the electrode active material composite particles of the present disclosure, in which the d10 of the composite particles was from 2.9 µm to 6.5 µm and the ratio of the d10 of the composite particles to the d50 of the composite particles was from 0.40 to 0.65, the ion conductivity was higher and the restraint pressure increase amount was smaller than those of the batteries of Examples 1 and 2.

In the negative electrode active material layers and the batteries of Examples 9 to 12 including the electrode active material composite particles of the present disclosure, in which the d10 of the composite particles was from 4.0 µm to 4.8 µm and the ratio of the d10 of the composite particles to the d50 of the composite particles was from 0.40 to 0.65, the ion conductivity was higher and the restraint pressure increase amount was smaller than those of the batteries of Examples 3 to 8 and 13.

### REFERENCE SIGNS LIST

- 1: Battery
- 10: Negative electrode current collector layer
- 20: Negative electrode active material layer
- 30: Electrolyte layer
- 40: Positive electrode active material layer
- 50: Positive electrode current collector layer

## Claims

1. Electrode active material composite particles each including a plurality of silicon particles as primary particles, wherein
a d10 of the composite particles is from 2.5 µm to 8.0 µm, and
a ratio of the d10 of the composite particles to a d50 of the composite particles is from 0.40 to 0.65.

2. The electrode active material composite particles according to claim 1, wherein the d10 of the composite particles is from 2.9 µm to 6.5 µm.

3. The electrode active material composite particles according to claim 2, wherein the d10 of the composite particles is from 4.0 µm to 4.8 µm.

4. The electrode active material composite particles according to any one of claims 1 to 3, wherein the d50 of the composite particles is from 4.7 µm to 10 µm.

5. The electrode active material composite particles according to any one of claims 1 to 4,
wherein a d90 of the composite particles is from 8.0 µm to 20 µm, and
wherein a ratio of the d10 of the composite particles to the d90 of the composite particles is from 0.20 to 0.40.

6. The electrode active material composite particles according to any one of claims 1 to 5, wherein a ratio of a d50 of the primary particles to the d50 of the composite particles is from 0.070 to 0.15.

7. The electrode active material composite particles according to any one of claims 1 to 6, wherein the silicon particles are porous silicon particles.

8. The electrode active material composite particles according to any one of claims 1 to 7, the electrode active material composite particles each further including a binder.

9. An electrode mixture including the electrode active material composite particles according to any one of claims 1 to 8.

10. A battery (1), having an electrode active material layer (20), wherein
the electrode active material layer (20) contains the electrode mixture according to claim 9.

11. The battery (1) according to claim 10, wherein the battery is a solid-state battery.

12. A method for producing the electrode active material composite particles according to any one of claims 1 to 8, the method including:
providing a slurry including a plurality of silicon particles as primary particles, and a dispersion medium; and
drying and removing the dispersion medium by spray drying,
wherein a solid concentration of the slurry is from 10 mass% to 40 mass%, and
wherein a liquid feed rate of the slurry in the spray drying is from 10 g/h to 300 g/h.
